# EUROPEAN PATENT APPLICATION

(11) **EP 1 089 417 A2**
(43) Date of publication of application: **04.04.2001**
(21) Application number: 00118152.8
(22) Date of filing: 29.08.2000
(51) Int. Cl.: H02K 21/14

(54) **An alternating current dynamo for a vehicle**

(30) Priority: 30.09.1999 JP 27815699
(71) Applicant: Hitachi, Ltd., Chiyoda-ku, Tokyo 101-8010 (JP)
(72) Inventor: Kanazawa, Hiroshi, Hitachi Ltd. Intell. Prop. Gr., Chiyoda-ku, Tokyo 100-8220 (JP); Tahara, Kazuo, Hitachi Ltd. Intell. Prop. Gr., Chiyoda-ku, Tokyo 100-8220 (JP); Honda, Yoshiaki, Hitachi Ltd. Intell. Prop. Gr., Chiyoda-ku, Tokyo 100-8220 (JP); Takano, Masami, Hitachi Ltd. Intell. Prop. Gr., Chiyoda-ku, Tokyo 100-8220 (JP); Suzuki, Osamu, Hitachi Ltd. Intell. Prop. Gr., Chiyoda-ku, Tokyo 100-8220 (JP); Matsubara, Kenichiro, Hitachi Ltd.Intell. Prop. Gr, Chiyoda-ku, Tokyo 100-8220 (JP)
(74) Representative: Beetz & Partner Patentanwälte

(57) **Abstract**

According to the invention a copper loss of a stator winding (106) which is the largest loss of an alternating current dynamo for a vehicle is reduced by optimizing a balance of a ratio of a rotor outside diameter to a stator outside diameter, so that efficiency may be improved. Permanent magnets (112) are arranged between claws of an alternating current dynamo for a vehicle having a claw-shaped magnetic pole structure. A ratio of the rotor outside diameter to the stator outside diameter is set at less than 0.73.

## Description

### BACKGROUND OF THE INVENTION

The present invention relates to an alternating current dynamo for a vehicle.

An alternating current dynamo (AC dynamo) for a vehicle includes a stator having a stator winding and a rotor having a rotor winding. The rotor has claw-shaped magnetic poles arranged opposite to each other and the rotor winding arranged inside the claw-shaped magnetic poles. The claw-shaped magnetic poles have claws projecting in an axial direction, and the claws are alternately arranged in a circumferential direction. Among AC dynamos for vehicles, there is one in which permanent magnetic poles are provided between claw portions of the claw-shaped magnetic poles. One example of the AC dynamo for a vehicle is described in JP-A-9-131030 specification.

One of the problems to be solved of the AC dynamo for a vehicle is to further improve efficiency. For example, in an AC dynamo for an automobile, equipment mounted on an automobile requires more electric power than that in the past. Furthermore, in order to protect the global environment, it is necessary to reduce the energy consumption of an automobile, especially the fuel consumption. From this, a highly efficient AC dynamo is desired.

### SUMMARY OF THE INVENTION

It is an object of the present invention to provide an efficient AC dynamo for a vehicle.

According to one aspect of the present invention, there is provided an alternating current dynamo for a vehicle, comprising: a rotor which includes a pair of oppositely arranged claw-shaped magnetic poles and a field winding for magnetizing said claw-shaped magnetic poles, each of said claw-shaped magnetic poles being formed with a plurality of claw portions extending in an axial direction and the claw portions of one of the claw-shaped magnetic poles being arranged alternately to the claw portions of the other of the claw-shaped magnetic poles in a circumferential direction; permanent magnets arranged between said alternately arranged claw portions; and a stator comprising a stator core arranged outside said rotor with a specific space against said rotor and a stator winding which is held by said stator core and generates AC voltage by rotation of said rotor; wherein said rotor and said stator core have external appearances substantially in circle, and a ratio Dr/Ds is within a range of 0.72 to 0.6 in which Dr denotes an outside diameter of said rotor and Ds denotes an outside diameter of said stator.

According to another aspect of the present invention, there is provided an alternating current dynamo for a vehicle, comprising: a rotor comprising a first claw-shaped magnetic pole having a plurality of claw portions projecting in an axial direction, a second claw-shaped magnetic pole having a plurality of claw portions projecting in the axial direction, said first and second claw-shaped magnetic poles being arranged opposite to each other and said claw portions of each being alternately arranged in a circumferential direction, and a field winding arranged inside said claw portions for magnetizing said claw-shaped magnetic poles; permanent magnets arranged between said alternately arranged claw portions; and a stator comprising a stator core arranged with a specific space against said rotor and having teeth and a stator winding arranged in said teeth; wherein a ratio Lt/Ds is more than 0.1 and a ratio Dr/Ds is within a range of 0.72 to 0.6 in which Lt denotes a length of said teeth in a radial direction, Ds denotes an outside diameter of said stator core and Dr denotes an outside diameter of said rotor.

In the invention, the outside diameter of the rotor is made small so as to enlarge a winding space for the stator winding. Therefore, it is possible to enlarge a diameter or a sectional area of the winding wire to reduce its resistance and copper loss resulted at the stator winding, so that efficiency is improved.

### BRIEF DESCRIPTION OF THE DRAWINGS

Fig. 1 is a cross-sectional view of an air-cooled alternating current dynamo for a vehicle according to the present invention;
Fig. 2 is a partial enlarged view of the cross-sectional view of the air-cooled alternating current dynamo for a vehicle;
Fig. 3 is a lateral cross-sectional view of a stator of the air-cooled alternating current dynamo for a vehicle;
Fig. 4 is a graph for describing an output characteristic to a ratio of an outside diameter of a rotor to the outside diameter of a stator;
Fig. 5 is a graph for describing various characteristics to the ratio of the outside diameter of a rotor to the outside diameter of the stator;
Fig. 6 is a perspective view of the rotor;
Fig. 7 is an enlarged view of claw portions;
Fig. 8 is a cross-sectional view taken along line VIII-VIII in Fig. 6;
Fig. 9 is a vertical cross-sectional view of a water-cooled alternating current dynamo for a vehicle according to the invention;
Fig. 10 is a view for describing another embodiment of a field winding; and
Fig. 11 is a circuit diagram of an alternating current dynamo.

### DESCRIPTION OF THE PREFERRED EMBODIMENTS OF THE INVENTION

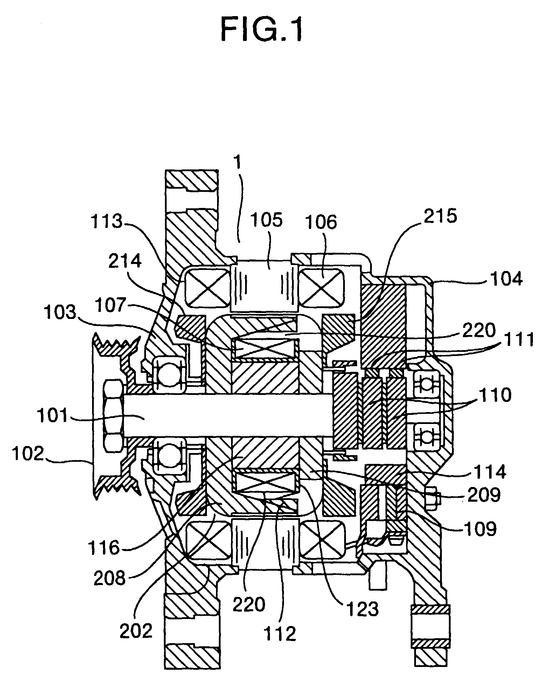

A first embodiment of an alternating current dynamo for a vehicle according to the present invention will be described with reference to Fig. 1.

An alternating current dynamo for a vehicle 1 of has two brackets, and these brackets comprise a front bracket 103 arranged on a side of a pulley 102 and a rear bracket 104 arranged on an opposite side of the pulley 102. The brackets 103 and 104 support a shaft 101 through a bearing on a side of the pulley and a bearing on an opposite side of the pulley. At one end of the shaft 101, the pulley 102 is attached, and at the other end, two slip rings 110 are attached. The pulley 102 is connected to a pulley (not shown) fixed to an output shaft of an engine through a belt (not shown), and it rotates in proportion to rotational speed of the engine.

Two brushes 111 are attached to a brush holder so that two slip rings 110 may slide on the two brushes 111, respectively, and a field current is supplied to a field winding 107 from the brushes 111. A rotor 202 is attached to the shaft 101 between the pulley 102 and the slip rings 110.

The rotor 202 has a first claw-shaped magnetic pole 208 and a second claw-shaped magnetic pole 209, and the first and second claw-shaped magnetic poles 208, 209 are arranged opposite to each other in the axial direction. Each of the claw-shaped magnetic poles 208, 209 has a plurality of claw portions projecting in the axial direction, that is, extending in the axial direction of the rotor 202. The claw portions of the first claw-shaped magnetic pole 208 and the second claw-shaped magnetic pole 209 are alternately arranged in the peripheral, that is, circumferential direction of the rotor 202. On both sides of the rotor 202, two cooling fans 214, 215 are arranged for cooling the heat generated in the stator winding. Furthermore, inside the rotor 202, a yoke 116 is provided, and at the peripheral portion thereof, the field winding 107 wound on a bobbin 123 is provided. By supplying a DC current from the slip rings 110 to the field winding 107, the claw-shaped magnetic poles 208, 209 are magnetized. The field winding 107 in this embodiment has a circular shape, and it is one for power generation of 12 volts or one for power generation of 24 volts, and it has a diameter of 0.7 mm to 1.0 mm.

Between adjacent claw portions of the pair of claw-shaped magnetic poles 208, 209, permanent magnets 112 are arranged, respectively. On the peripheral portion of the claw-shaped magnetic poles 208, 209 of the rotor 202, non-magnetic plates 113 are arranged, which is a permanent magnet cover for preventing popping-out of the permanent magnets 112. The non-magnetic plates 113 are, for example, a stainless plate, and they are welded by laser welding between the adjacent claw portions.

A stator core 105 is arranged between the front bracket 103 and the rear bracket 104. At an inner side of the stator core 105, the rotor 202 is arranged through an air gap with a specified width. Furthermore, the non-magnetic plates 113 arranged on the surfaces of the claw-shaped magnetic poles 208, 209 are arranged apart from an inner peripheral surface of the stator core 105 with a little space (mechanical gap). The width of this mechanical gap (air gap), that is, the air gap length g is a previously determined space required from the relation of the mechanical characteristics, and in this embodiment, it is about 0.3 mm to 0.5 mm. Furthermore, since the non-magnetic plates 113 are used, the magnetic gap length becomes larger than the mechanical gap length by a length corresponding to the thickness of the non-magnetic cover. In this embodiment, the thickness h of the non-magnetic plates 113 is 1 mm. That is, it is two times or more the air gap length g.

By increasing the thickness h of the non-magnetic plates 113, the magnetic gap length can be increased, so that the leaking magnetic flux may be reduced. This results in the improvement of efficiency. However, when excessively increasing the thickness h of the non-magnetic plates 113, a space 220 between the field winding 107 and the permanent magnets 112 is narrowed, so that the cooling effect may be decreased. This causes, as a result, the problem of temperature rising and the lowering of the overall efficiency of power generation. From these reasons, it is desirable that the thickness h of the non-magnetic plates 113 is within the range of two to four times the air gap length g.

The field winding 107 is wound on the bobbin 123 made of a liquid crystal polymer or a highly heat conductive PPS, which are good heat conductive material. Since the bobbin 123 is made of a good heat conductor, the heat generated in the field winding 107 is easily transmitted to the yoke 116 and the claw-shaped magnetic poles 208, 209.

When the permanent magnets 112 are arranged between claw portions of the claw-shaped magnetic poles 208, 209, the cooling effect of the field winding 107 is lowered. That is, when there is no permanent magnet 112, a lot of cooling winds act on the surface of the field winding 107, so that a large cooling effect can be obtained. In the present embodiment, the permanent magnets 112 are arranged, so that the flow of cooling winds acting on the surface of the field winding 107 may be blocked. Therefore, in the present embodiment, a material excellent in heat conductivity is used for the bobbin 123, so that the heat may go off.

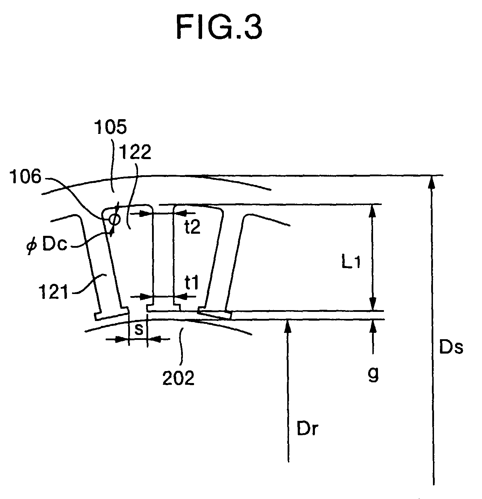

As shown in Fig. 3, the stator core 105 is formed with teeth 121 and slots 122, and in the slot 122 corresponding to the recess of the stator core 105, the stator winding 106 is wound by three-phases. When the magnetized claw-shaped magnetic poles 208, 209 are rotated by the rotational drive of the engine, a three-phase induced voltage is generated in the stator winding 106. As shown in Fig. 1, the stator core 105 is fixed between the front bracket 103 and the rear bracket 104 by a socket and spigot joint. Inside the rear bracket 104, a rectification diode 109 configuring a rectifier circuit and an IC regulator 114 for regulating the generated voltage are arranged.

The rectification diode 109 rectifies the three-phase AC voltage generated in the stator winding 106 by full-wave rectification and converts it into a DC voltage. The IC regulator 114 controls the current to be supplied to the field winding so that the DC voltage rectified by the diode may be kept to a voltage of about 14.3 volts for charging a battery. By keeping the output voltage at about 14 volts, a battery of 12 volts can be charged. Accordingly, actually, an output power of a voltage higher than 12 volts by several volts is generated, but to make the description easy to understand, it will be called a 12-volt dynamo.

In the AC dynamo for a vehicle 1 configured as described above, when the pulley 102 is rotated by the drive of an engine, the shaft 101 rotates together with the slip rings 110 and the rotor 202, and the DC current from the brushes 111 is conducted to the field winding 107 in the rotor 202, and the field winding 107 acts so that the N-pole and S-pole may be configured on the respective magnetic poles of the claw-shaped magnetic poles 208, 209. The magnetic flux by the field winding 107 forms a magnetic circuit in which one coming out of the claw portion of the claw-shaped magnetic pole 208 of the N-pole returns to the claw portion of the claw-shaped magnetic pole 209 of the S-pole through the stator core 105. The magnetic flux of this magnetic circuit makes interlinkage with the stator winding 106, so that a three-phase induced voltage may be generated in the stator winding 106.

The polarities of the plurality of permanent magnets 112 arranged between the claw-shaped magnetic poles 208, 209 are made such that the same poles are polarized in the mutually opposite direction on the claw magnetic poles, which is for the purpose of increasing the effective magnetic flux passing through the stator winding 106. In the present embodiment, between the claw magnetic poles, neodymium magnets with a high heat resistance are used. They are mounted in an engine room, and it is heated to a high temperature, but still the characteristic of the magnet can be kept, and an efficient power generation is possible.

The stator winding 106 is formed by a manner in which one continuous circular enamel wire is wound like a ring by a required number of windings and is deformed to a star corresponding to the number of poles and is inserted into slots, and it is made by a method excellent in the ability of mass production. Therefore, the enamel wire to be used is shaped like a circle, and even if there is a little twist when wound like a ring, no obstacle occurs. Furthermore, in the present embodiment, in order to lower the resistance value of the stator winding 106, a thick wire is arranged in the slot of the stator. It is a stator winding for 12 volts and the diameter is 1 mm or more. Preferably, the diameter is about 1.2 mm to 1.6 mm. It is also possible to use a rectangular enamel wire besides the circular enamel wire. In this case, a manufacturing method different from that of a ring-like winding is used. In terms of not the diameter but the cross-sectional area, the cross-sectional area is 0.8 square mm or more, and preferably, it is 1.1 square mm or more. Furthermore, an excessive thickness causes a problem, and the cost is raised. 2.1 square mm or less is preferable.

Since an entrance of a slot cannot be enlarged, the insertion into the slot becomes difficult when the diameter of the wire of the stator winding 106 is increased. When the current value per winding of the stator winding 106 is decreased, the flowing current density can be lowered without increasing the diameter of the wire. Therefore, in the present embodiment, it is also possible for the number of parallel circuits of the stator winding to be four or six. Thus, by increasing the number of parallel circuits, and by configuring the diameter of the winding with a thickness of the above described value, the workability is improved, and the copper loss is still considerably reduced. Thus, by increasing the number of parallel circuits from two to four or by increasing the number to six, the one-phase stator winding which has been configured by two becomes configured by four, or becomes configured by six. By increasing the number of parallel circuits to four from two, the diameter of the wire of the stator winding arranged in one slot can be relatively thin when the copper loss is the same, and the occupied ratio of the winding in the slot is improved.

The output power becomes larger as the occupied ratio of the winding in the slot of the stator core becomes higher. By using a rectangular wire, the occupied ratio can be improved to about 90%, but it becomes difficult for the cooling wind from the cooling fan to pass. Accordingly, in the present embodiment, a circular wire (wire with an approximately circular cross section) is used, and the occupied ratio is within the range of 55% to 80%. Furthermore, in the case where the rectangular wire is used, the regular winding is required in the slot, and therefore, there is a problem of enlarging the winding end. Furthermore, it is also possible to improve the occupied ratio by using a circular wire and by crushing the circular wire in the slot.

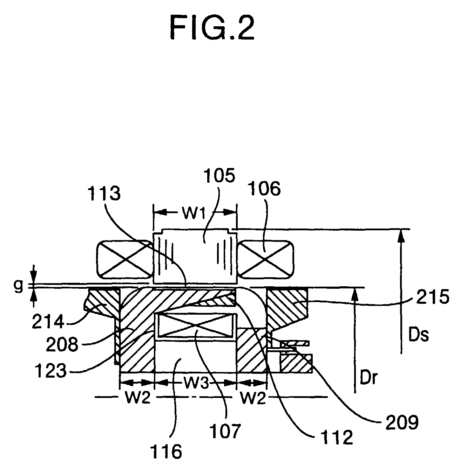

Next, the relation of size of the parts forming the magnetic circuit will be described in detail with reference to Fig. 2 and Fig. 3. The same reference numeral as that in Fig. 1 denotes the same object. The maximum outside diameter of the stator core 105 on which the stator winding 106 is wound is made to denote the stator outside diameter Ds. The outside diameter of the rotor 202 structured by the field winding 107, yoke 116, and claw-shaped magnetic poles 208, 209 is denoted by characters Dr. In this embodiment, it is the maximum outside diameter. Furthermore, in this embodiment, the diameter of the larger one among the thickness of the non-magnetic plates 113 which is the permanent magnet cover, the permanent magnet part and the claw portion is made to be the outside diameter Dr of the rotor 202. The length of the gap between the inner surface of the stator core and the periphery of the rotor, that is, in this embodiment, the length of the mechanical gap between the inner surface of the stator core 105 and the peripheral surface of the claw-shaped magnetic poles 208, 209 is denoted by character g. In the embodiment of Fig. 2, character g denotes the air gap length. The outside diameter of the rotor 202 is larger one, for example, between the claw portion diameter of the claw-shaped magnetic poles 208, 209 and the diameter of the non-magnetic plates 113 which are the permanent magnet cover.

The detailed relation of size will be described by using Fig. 3. Fig. 3 is an enlarged view of a part of the stator core 105, viewed from the axial direction. The stator core 105 comprises the teeth 121 and slots 122, and the stator winding 106 is arranged in these slots 122. As described in Fig. 2, the outside diameter of the stator core 105 is denoted by characters Ds, the outside diameter of the rotor 202 is denoted by characters Dr, the air gap length is denoted by character g, and the tooth length is denoted by characters Lt. Furthermore, in the present embodiment, a circular wire is used for the stator winding 106, and the diameter of the circular wire is denoted by characters Dc. Since the stator winding 106 is inserted from the entrance of the slot 122, it is necessary for the diameter Dc of the winding to be smaller than the entrance width S of the slot 122.

In the present embodiment, in the teeth 121, the width t1 on the rotor side is approximately the same as the width t2 on the outside, so that the area of the slot 122 may effectively be insured. When narrowing the width of the teeth 121, the area of the slot which is the winding space can be increased, but the flux density of the teeth 121 is raised, so that the magnetic resistance may be increased. Therefore, the output power of the dynamo is lowered. The present embodiment shows the optimum value with considering these points, too.

Herein, in the embodiment shown in Fig. 2, the width W1 in the axial direction of the stator core 105 is 28 mm, the outside diameter Ds is 139 mm, the outside diameter Dr is 97.8 mm, the inside diameter of the stator core 105 is 98.6 mm, and the gap g is 0.4 mm. These figures are shown as one example, and preferably, the gap g is 0.3 mm to 0.6 mm, and when satisfying this condition and satisfying the condition to be described later on the ratio of Dr/Ds, the outside diameters Ds, Dr can be changed within the range of 5% from the above described numerical values to the plus side and minus side. In the embodiment of Fig. 2, the maximum rotational speed of the rotor 202 is 18,000 rpm, the width W2 is about 11 mm, and the width W3 is about 27 mm.

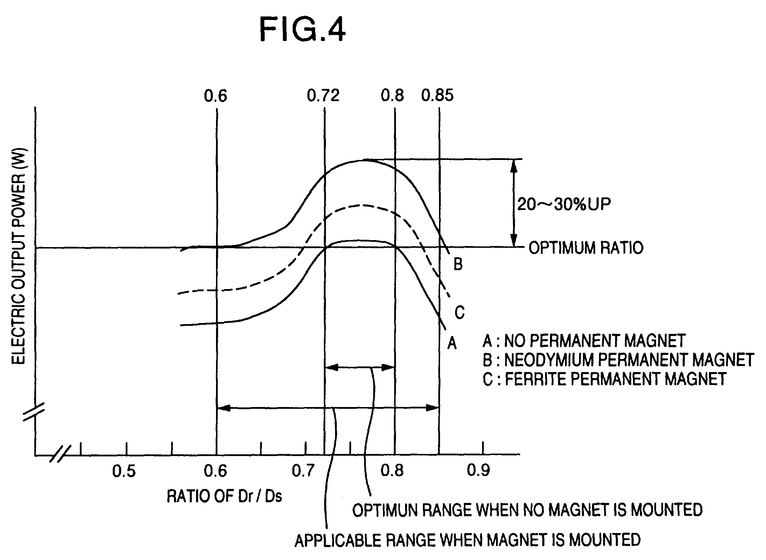

Next, the relation between the outside diameter Dr of the rotor 202 and the outside diameter Ds of the stator in the present embodiment will be described. Fig. 4 is a graph showing the characteristic of the output power of a dynamo in the case where the ratio Dr/Ds of the outside diameter Dr of the rotor 202 to the outside diameter Ds of the stator described in Fig. 3 is taken as the horizontal axis. Since the AC dynamo for a vehicle 1 is connected to the output shaft for driving auxiliary machines of the engine through a belt, the place where it is arranged is limited. Furthermore, the packaging density in the bonnet of an automobile is high, and naturally, a space which can be allocated to the AC dynamo for a vehicle is determined. In the present state, the space is a space of a diameter of 200 mm or less in terms of the outside diameter of the stator core of the AC dynamo for a vehicle. Furthermore, there is a tendency for the output current required for the power generation to become larger, and in the present air-cooled AC dynamo for a vehicle, the maximum value of the output current is about 150 A. Especially, in the case of an air-cooled dynamo, the cooling wind of the cooling fans 214, 215 provided to the rotor 202 is decreased when rotating at a low speed, and therefore, it has been difficult to increase the generated current.

In case of a conventional AC dynamo for a vehicle using no permanent magnet, if the rating is constant, the ratio Dr/Ds of the rotor outside diameter Dr to the stator outside diameter Ds when the generated output power becomes the maximum power is substantially constant. As a result of calculating this ratio, as shown in Fig. 4, it has been found that the output power becomes the maximum power when the ratio of the rotor outside diameter Dr to the stator outside diameter Ds is within the range of 0.72 to 0.8 (curve (A)). In the case of a present dynamo, the ratio of the rotor outside diameter Dr to the stator outside diameter Ds is designed to be within this range. For example, in the case of a dynamo with the stator outside diameter of 139 mm of our company, the rotor outside diameter is 108 mm, and when converted to the above described ratio, it is 0.77.

Recently, as a countermeasure to the global warming, in an automobile, refinements have been performed for the purpose of improving the fuel expenses. For that, it is of course important to reduce the loss of the engine, but it is also necessary to promote the tendency to raise the efficiency in the AC dynamo for a vehicle which is an auxiliary machine. Previously, the efficiency has been sacrificed and the priority of the design has been put on the compactness, and therefore, the copper loss produced in the stator winding accounts for about 70% of the loss. Since the output voltage is comparatively low, the current is increased when the output is increased, and accompanied with that, the loss has had no choice but to increase. Furthermore, since it has been used at a position approximately near the limit in terms of temperature, the margin in terms of temperature is small, and it has been required to make the cooling fans 214, 215 provided to the rotor large-sized for attaining a higher output than that. For that, the increase of noise because of the cooling fans 214, 215 and increase of loss because of the windage, and the lowering of efficiency caused by the increase of the copper loss of the stator winding because of raising the output power.

The conventional permanent magnet 112 has been used for improving the output power, but in the present invention, by looking at that from a different viewpoint as an item for improving the efficiency, it is intended to solve the problems such as temperature rising or noise increasing, and furthermore, to realize a highly efficient AC dynamo for a vehicle in which the copper loss of the stator winding is reduced.

In the above described Fig. 4, the characteristic of the output power in the case where no permanent magnet 112 is arranged between the claw magnetic poles is such a characteristic as shown in (A), in which a range of 0.72 to 0.8 is the range of maximizing the output current when being calculated by using the ratio of the rotor outside diameter Dr to the stator outside diameter Ds. The reason thereof is that when the rotor outside diameter Dr is excessively enlarged, the stator winding cannot be wound and the diameter of the wire is thinned and the resistance value is increased and consequently, the output power is lowered, and that on the contrary, when the rotor outside diameter Dr is decreased, the field winding space is reduced and consequently, the generated output power is lowered.

However, in the case where permanent magnets 112 are arranged between the claw magnetic poles, preferably in the case where permanent magnets 112 of the neodymium family with a high density of the residual magnetic flux are arranged, they work as the magnetizing action such as reduction of the leaking magnetic flux between the claw magnetic poles or more, so that the effective magnetic flux can be increased by 20% or more. Depending on this increase of the effective magnetic flux, the output current of the AC dynamo for a vehicle which is the generated current is increased at least by 20% to 30%. Accordingly, the output characteristic in the case where permanent magnets 112 are mounted between the claw magnetic poles becomes a characteristic shown in (B) of Fig. 4, and the selective range of the outside diameter Dr of the rotor 202 and the outside diameter Ds of the stator is widened. Furthermore, in the case of a ferrite magnet whose density of the residual magnetic flux is lower than that of a neodymium magnet, as shown by curve (C), the characteristic is a characteristic between curve (A) and curve (B). For example, as one example, the optimum value of the electric output power in the case where no permanent magnet 112 is mounted is obtained when the ratio of the outside diameter Dr of the rotor 202 to the outside diameter Ds of the stator is within the range of 0.72 to 0.8, but it has been found that in the case of intending to obtain the same electric output power, if permanent magnets 112 of the neodymium family are arranged between the claw magnetic poles, the range of the ratio of the outside diameter Dr of the rotor 202 to the outside diameter Ds of the stator can be widened to a range of about 0.6 to 0.85. That is, it is found that by arranging permanent magnets 112 between the claw magnetic poles, the range is widened, which can be adopted by the ratio of the outside diameter Dr of the rotor 202 to the outside diameter Ds of the stator for satisfying the electric output value equal to that of the conventional generator.

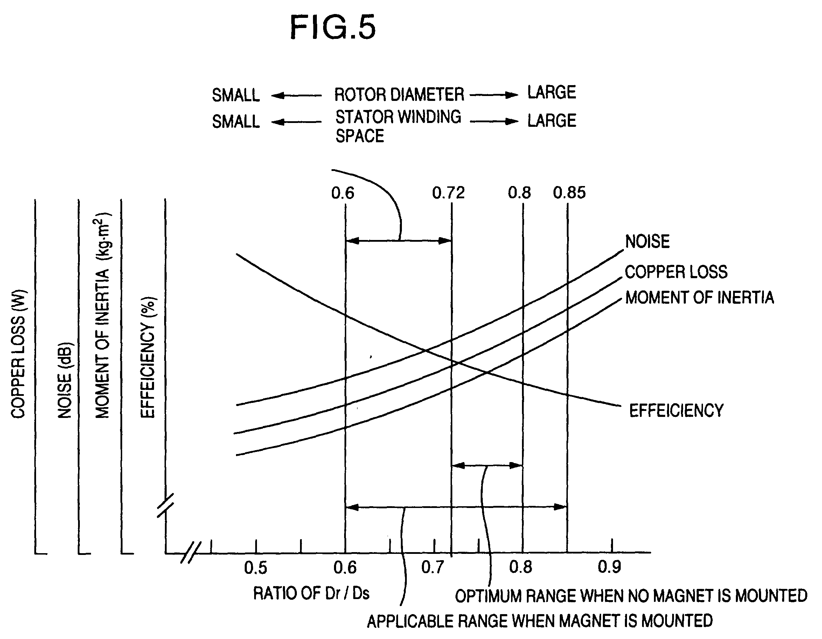

Fig. 5 is a graph showing the copper loss produced in the stator winding 106, the noise of the cooling fans 214, 215 configured with approximately the same outside diameter as that of the rotor 202, the moment of inertia of the rotor 202, and the efficiency as an AC dynamo for a vehicle, in the case where the above described ratio of the rotor outside diameter Dr to the stator outside diameter Ds is taken as the horizontal axis. The copper loss produced in the stator winding 106, the noise because of the cooling fans 214, 215, and the moment of inertia of the rotor 202 become larger as the ratio of the outside diameter Dr of the rotor 202 to the outside diameter Ds of the stator becomes larger. For example, the fact that the ratio of Dr/Ds is large means that the outside diameter Dr of the rotor 202 becomes relatively larger, and consequently, the space of the stator winding 106 is narrowed. Accordingly, in order to produce an output power even in this state, it is necessary for the number of windings of the stator to be constant, and therefore, the diameter of the stator winding has no choice but to be thinned. Accordingly, the resistance value of the stator winding is increased, so that the occurrence of the copper loss may be increased. Furthermore, since the occurrence of the copper loss is increased, it is necessary for the cooling fans 214, 215 provided to the rotor 202 to have a large outside diameter, so that the noise caused by the cooling fans 214, 215 may be increased. Therefore, there is tendency for the efficiency of the dynamo to be lowered. Furthermore, since the outside diameter Dr of the rotor 202 becomes larger, the moment of inertia of the rotor 202 becomes larger, and in the state of being assembled in the vehicle, the slip of the belt is increased by the rotational fluctuation of the engine, and a problem of shortening the life of the belt is caused.

In the reverse case, the fact that Dr/Ds becomes smaller means that the outside diameter of the rotor 202 becomes smaller, and since the inside diameter of the stator can be reduced, the teeth 121 becomes longer toward the inner side so that the slot area can be increased. Therefore, the diameter of the stator winding can be increased, and the resistance of the stator winding can be decreased, so that the copper loss produced by the same generated current can be reduced. Furthermore, since the cooling fans 214, 215 can also be miniaturized correspondingly to the reduction of the heat generation by the copper loss, the reduction of the windage and the reduction of the noise by the wind noise become possible. Consequently, it is possible to design the efficiency higher as a dynamo. Furthermore, by reducing the outside diameter of the rotor 202, the moment of inertia of the rotor 202 can be decreased, and the life of the belt connected to the engine can largely be extended.

At the time of judging these things as a whole, in an AC dynamo for a vehicle having permanent magnets 112 arranged between the claw-shaped magnetic poles, it can be realized to satisfy the same generated power, when the ratio of the outside diameter Dr of the rotor to the outside diameter Ds of the stator is within a range of 0.6 to 0.85, but considering the efficiency, noise, margin in temperature rising, extension of life of a belt or the like, in the present invention, a ratio of 0.72 or less is adopted as the above described ratio, and consequently, it is possible to structure an AC dynamo for a vehicle excellent in the efficiency, noise, margin in temperature rising, life of a belt or the like.

Furthermore, in the case where the generated output power is also considered, it is possible to satisfy all conditions by making the ratio be 0.6 to 0.72. A value of 0.6 of the ratio of the outside diameter Dr of the rotor to the outside diameter Ds of the stator is a figure determined from the insuring of the slot entrance width necessary for inserting the winding between adjacent teeth of the stator, and when the Dr/Ds is made smaller than this value, the winding cannot be inserted. That is, the value is a value to be one yardstick for the above described state.

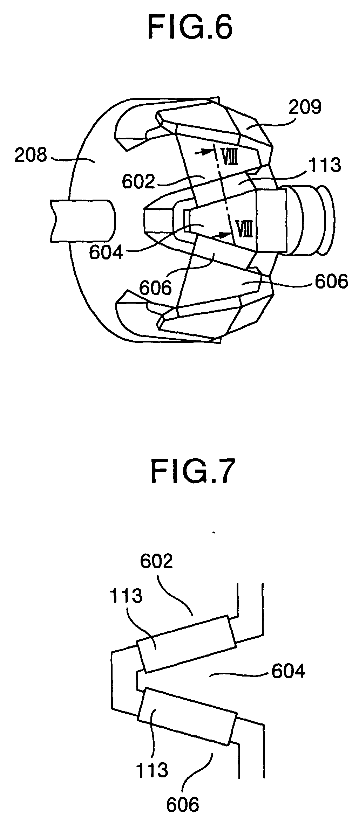

Fig. 6 is a view for describing the claw portions of the claw-shaped magnetic pole 208 and the claw-shaped magnetic pole 209. Reference numeral 602 denotes the claw portion of the claw-shaped magnetic pole 208, and reference numeral 604 denotes the claw portion of the claw-shaped magnetic pole 209. As described above, a permanent magnet is provided between the claw portion 602 and the claw portion 604, and outside that, non-magnetic plates 113 are provided. Thus, between a claw portion and an adjacent claw portion, the permanent magnet 112 and the non-magnetic plate 113 are provided through the whole periphery.

Fig. 7 is an enlarged view of part of the claw portions, and the non-magnetic plate 113 has the circumference thereof secured to the claw portion 602 and the claw portion 604 by laser welding. The non-magnetic plate 113 between the claw portion 604 and the claw portion 606 is also similarly processed, and thus, the non-magnetic plates 113 are secured between the respective claw portions.

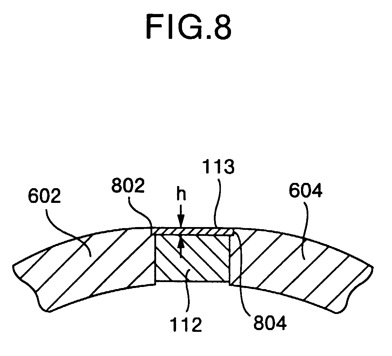

Fig. 8 is a cross-sectional view taken along line VIII-VIII in Fig. 6. The claw portion 602 and the claw portion 604 are shown by the cross section, and between these claw portion 602 and claw portion 604, the permanent magnet 112 and the non-magnetic plate 113 are provided, and these are also shown by the cross section in Fig. 8. The respective outside parts 802, 804 of the claw portion 602 and the claw portion 604 are cut off as shown in Fig. 7, and the non-magnetic plate 113 is embedded therein, and as mentioned above, it is fastened by laser welding. A groove between the claw portion 602 and the claw portion 604 has such a relation that it is slanted with respect to the rotational direction of the rotor as shown in Fig. 6 and Fig. 7, and the above described cut is provided in the direction of widening this groove. This relation is similar in another groove.

In Fig. 8, it is possible for the shape of the groove between the claw portion 602 and the claw portion 604 to be vertical, but it is formed to have a shape of a little narrowing on the outside, that is, the non-magnetic plate 113 side. However, when this inclination is large, the magnet becomes shaped like a trapezoid. In the present embodiment, it is approximately vertical. That is, it has a shape of a little narrowing on the non-magnetic plate 113 side. It is difficult to fasten the magnet by this small narrowing, and the non-magnet plate 113 is provided outside the magnet. The thickness h of the non-magnetic plate 113 is about 1 mm. The thickness h is about two times the gap g or more. Consequently, it is possible to restrain the leaking magnetic flux through the non-magnetic plate 113 of the permanent magnet 112 to a small amount. That is, the gap between the claw portion 602 or claw portion 604 and the stator core is g. On the other hand, the magnetic circuit of the leaking magnetic flux produced between the permanent magnet 112 and the stator core passes through at least the non-magnetic plate 113 and the gap g, so that the magnetic resistance may be increased.

In order to increase the magnetic resistance, it is sufficient to increase the thickness h of the non-magnetic plate 113, but when excessively increased, the cross-sectional area coming into contact with the claw magnetic pole of the permanent magnet 112 is decreased, and the output current is lowered so that the efficiency may be decreased. As the contact area between the claw portion 602 and claw portion 604 becomes larger, the magnetic flux of the permanent magnet 112 can be utilized more effectively and the output power becomes larger. Herein, it is preferable for the permanent magnet 112 to come into contact with the claw portion 602 or the claw portion 604, and when there is a space or a non-magnetic body between them, the magnetic resistance is increased, so that the efficiency may largely be decreased.

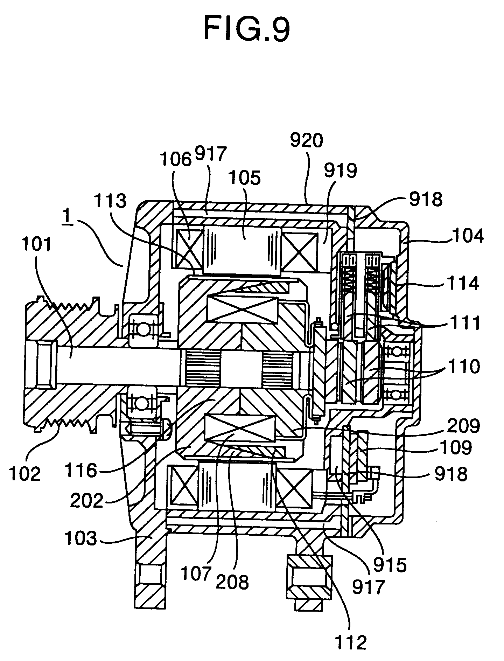

Next, a case of being applied to an AC dynamo for a vehicle with a water-cooled structure which is a second embodiment will be described by with reference to Fig. 9. Basically, the action and the effect is similar to those of each corresponding part of the first embodiment described with reference to Fig. 1 to Fig. 7 except for part of the parts. A part to which the same reference numeral is given has basically the same action and the effect.

Fig. 9 is a vertical cross-sectional view of a second embodiment of the AC dynamo for a vehicle 1. First, the structure will be described. The AC dynamo for a vehicle 1 of the present embodiment has two brackets 103, 104 on both sides of a housing 920. These brackets comprise a front bracket 103 arranged on a side of a pulley 102 and a rear bracket 104 on the side opposite to the pulley. At centers of both brackets, a shaft 101 is held through a bearing on the pulley side and a bearing on the side opposite to the pulley. At one end of the shaft 101, the pulley 102 is attached, and at the other end, two slip rings 110 are attached. The bearing on the pulley side has a bearing retainer provided to the front bracket 103 as a rotating stopper for an outer ring of the bearing. Furthermore, the pulley 102 is connected to a pulley arranged to an output shaft of an engine through a belt, and it rotates proportionally to the rotational speed of the engine.

To the slip rings 110, brushes 111 are slidably attached, and the field current is supplied to the field winding 107 of the rotor 202 from the brushes 111. The field winding 107 is wound on a bobbin 123 made of a liquid crystal polymer with a good heat conductivity or a highly heat conductive PPS or the like. The relation between this bobbin 123 and the field winding 107 is identical to that of the first embodiment, and the drawing has been omitted.

At a center of the shaft 101, the rotor 202 is attached. At the peripheral portion of the rotor 202, a pair of claw-shaped magnetic poles 208, 209 with a shape like a claw is arranged in the circumferential direction. Furthermore, at the center of the rotor 202, a yoke 116 is provided, and outside that, the field winding 107 is arranged to structure the winding of the yoke 116.

By letting a DC current from two slip rings 110 flow in the field winding 107, the claw-shaped magnetic poles 208, 209 are magnetized. Between the claw magnetic poles of the pair of claw-shaped magnetic poles 208, 209, that is between the claw portions, permanent magnets 112 are arranged, and outside the permanent magnets 112, a non-magnetic plate 113 is provided through the whole periphery. In this embodiment, differently from the first embodiment shown in Fig. 1 to Fig. 6, the permanent magnet cover 113 for preventing the permanent magnets 112 from popping off is arranged also at an outermost peripheral portion of the claw-shaped magnetic poles 208, 209. In this embodiment, the permanent magnet cover 113 is arranged also at the peripheral portion of the claw-shaped magnetic poles 208, 209, and therefore, it is configured by a non-magnetic stainless steel with a thickness of about 0.3 mm to 0.5 mm.

Between the front bracket 103 and the rear bracket 104, a housing 920 in which the stator core 105 is contained is arranged. There is such an arrangement relation that the inner peripheral surface of the stator core 105 is apart from the cover 113 arranged on the surface of the claw-shaped magnetic poles 208, 209 of the rotor 202 with a little space (mechanical gap). This mechanical gap length is a predetermined space required from the relation of the mechanical characteristic, and for example, it is about 0.3 mm to 0.5 mm. Accordingly, in this embodiment, considering the thickness of the stainless cover, the magnetic gap length is the sum of both and is 0.6 mm to 1.0 mm.

The stator core 105 is formed with teeth and slots. To the slot corresponding to the recess of the stator core 105, the stator winding 106 is wound by three-phases. When the magnetized claw-shaped magnetic poles 208, 209 are rotated by the drive of the engine, a three-phase induced voltage is generated in the stator winding 106. The stator core 105 is fastened to the inside of the housing 920 by shrinkage fitting. The clearance of the stator winding 106 in the slot of the stator core 105 and the coil end portion are charged with a good heat conductor 919. As a result, the stator core 105, the stator winding 106, and the housing 920 are integrally fastened by the good heat conductor 919 to make a structure excellent in heat conductivity. The above described good heat conductor is a heat conductor of the silicon rubber family whose coefficient of heat conductivity is larger than that of air, a heat conductive member of epoxy resin with a high coefficient of heat conductivity or the like.

In the housing 920, a water channel 917 for letting cooling water flow is formed. The water channel 917 comprises a plurality of passages extending in the axial direction. Preferably, the length in the axial direction is a length that is opposite to both the stator core 105 and the stator winding 106. There are a number of the above described water channels 917, and they are arranged expanding in the circumferential direction to the outside of the core 105 and the winding 106.

Furthermore, on the side opposite to the pulley of the housing 920, a second water channel 915 for cooling a rectification diode 109 is formed, and it is connected to the first water channel 917 in series in terms of the water flow. The cooling water channel 915 for the rectification diode 109 is formed by a side portion on the rear side of the housing and a plate 918. In this embodiment, grooves are provided on the rear side of the housing and the plate 918 is arranged with a relation of closing the grooves, so that the water channel 915 may be formed. To the plate 918, the rectification diode 109 is held, and there is such a structure that the heat of the diode runs off to the water channel through the plate 918.

A sealing material (not shown) for preventing the water leakage is charged between the housing 920 and the plate 918 (between connecting portions) so that the water leakage may be prevented. The plate 918 is fastened to the housing 920 by the rear bracket 104 arranged on the outside thereof with eight screws.

On the inside of the rear bracket 104, a minus side of the rectification diode 109 configuring a full-wave rectification circuit is directly fastened to the plate 918 for closing up the cooling water channel 117, and the rectifier diode on a plus side is arranged opposite to the minus side through an insulating material. Furthermore, an IC regulator 114 for regulating the generated voltage is arranged so that the cooling surface may come into contact with the rear bracket 104. The rectification diode 109 rectifies the three-phase AC voltage generated in the stator winding 106 by full-wave rectification and converts it into the DC voltage. The IC regulator 114 controls the field winding current so that the DC voltage rectified by the diode may be kept to a constant voltage of about 14.3 volts for charging the battery.

In the AC dynamo for a vehicle 1 configured as mentioned above, when the pulley 102 is rotated by the drive of the engine, the shaft 101 rotates together with the slip rings 110 and the rotor 202, and the DC current from the brushes 111 is sent to the field winding 107 in the rotor 202, and the field winding 107 acts so that N-pole and S-pole may be configured on the respective magnetic poles of the claw-shaped magnetic poles 208, 209. The magnetic flux by the field winding 107 forms a magnetic circuit for one going out of the claw portion of the claw-shaped magnetic pole 208 of N-pole to return to the claw portion of the claw-shaped magnetic pole 209 of S-pole through the stator core 105. By making the magnetic flux of the magnetic circuit perform interlinkage with the stator winding 106, the three-phase induced voltage is generated in the stator winding 106. The three-phase induced voltage is rectified by full-wave rectification with the rectification diode 109, and it is converted into the DC voltage. It is attained to make the rectified DC voltage be a constant voltage of about 14.3 volts by controlling the field winding current with the IC regulator 114. The permanent magnets 112 arranged between the claw magnetic poles are magnetized in the direction in which the same poles are opposite to each other between the claw magnetic poles, and it is provided for increasing the effective magnetic flux passing through the stator winding 106. In the present embodiment, water-cooling is employed for the cooling system, and therefore, the cooling effect at a low speed is high, and accordingly, neodymium magnets with a high heat resistance and a large density of the residual magnetic flux are used between the claw magnetic poles to attain a high output power.

Next, the cooling of the heat generation because of the copper loss occurred in the stator winding 106 will be described. As described above, the stator core 105 where the stator winding 106 is arranged is fastened to the housing 920 (for example, by shrinkage fitting), and it has a structure of easily transmitting heat to the housing 920. Furthermore, as described above, in order to improve the radiation of heat of the stator winding 106, a passage of radiation of heat is provided using a resin with a high heat conductivity so that the stator winding 106 and the inner surface of the housing 920 can come into contact with each other thermally. A plurality of holes penetrate the periphery of the housing 920 in the axial direction, and the water channel is shut tightly by the front bracket 103 and the plate 918 so that the water channel may be configured zigzag. It is configured that the cooling water flows along the zigzag water channel in the housing 920, and the cooling can be performed from the peripheral surface of the stator core 105. Furthermore, the heat because of the copper loss of the field winding 107 generated in the rotor 202 is radiated by using a passage which conducts the heat to the bracket through the shaft 101 and a passage which lets the heat flow to the front bracket 103 and the housing 920 through the internal air. Consequently, it is possible to suppress the internal temperature rising to a small amount.

As for the operation, there is no difference from the air-cooled dynamo shown in Fig. 1, and therefore, the detailed description will be omitted. In the magnetic circuit with a water-cooled structure shown in this Fig. 9, as mentioned above, the copper loss produced in the stator winding can also be reduced to 1/3 to 1/2 by setting the ratio of the outside diameter Dr of the rotor 202 to the outside diameter Ds of the stator at less than 0.73. Therefore, the efficiency can be improved by about 15% to 18% when converted to the efficiency of an AC dynamo for a vehicle. On the basis of the calculation by which the improvement of efficiency of an AC dynamo for a vehicle is converted to the fuel consumption of an automobile, an improving effect of the fuel consumption of about 3% is produced.

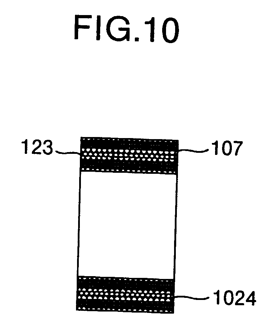

Next, by using Fig. 10, another embodiment of the bobbin 123 will be described. Fig. 10 shows a vertical cross-sectional view of a field winding which is integrally formed by a good heat conductor 1024 and which is also used for a bobbin. Thus, by integrally forming the field winding 107 by using a good heat conductor 1024, it is possible to make the field winding 107 excellent in cooling performance, and it is also possible to acceptably promote the cooling of the field winding even when permanent magnets 112 are arranged between the claw magnetic poles.

In the ratio of the teeth length Lt to the stator outside diameter Ds for realizing the ratio of the outside diameter Dr of the rotor 202 to the outside diameter Ds of the stator of the present invention as described above with reference to Fig. 3, a teeth length Lt of 10.0% or more of the stator outside diameter Ds has approximately the same meaning as the above described ratio of 0.72 or less of the outside diameter Dr of the rotor 202 to the outside diameter Ds of the stator.

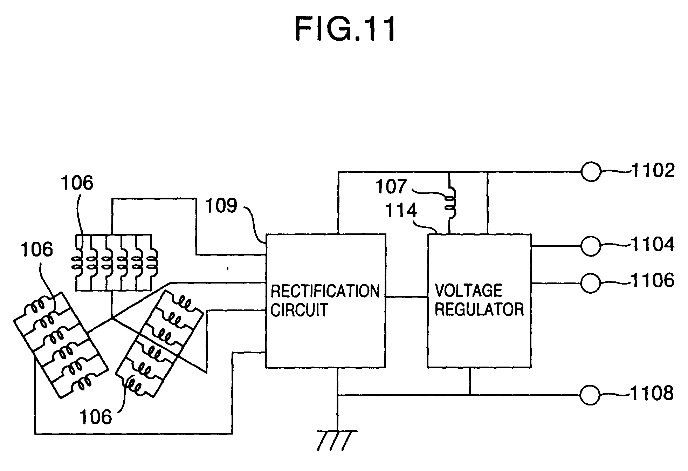

Fig. 11 is a circuit diagram of the first embodiment shown in Fig. 1 to Fig. 8 and the second embodiment shown in Fig. 9 and Fig. 10. The three-phase alternating current generated in the stator winding 106 is rectified by the rectification circuit 109, and it is outputted from output terminals 1102, 1108. The output terminals 1102, 1108 are connected to a battery. Furthermore, a terminal 1104 is connected to a terminal of the battery, and it is used for detecting the terminal voltage of the battery. A terminal 1106 is connected to an indicating lamp. The voltage regulator 114 controls the current of the field winding 107, and controls the generated voltage. In this embodiment, the voltage regulator 114 is configured by an IC (integrated circuit), and therefore, it has been called an IC regulator in the above description. In this embodiment, the stator winding 106 has six circuits connected in parallel, and therefore, the current in each coil becomes small, so that the cross-sectional area of one stator winding 106 can be reduced.

In the present invention, in order to make it possible to lower the resistance value of the stator winding for attaining the improvement in efficiency, the outside diameter of the rotor 202 is reduced so that the area of the stator slots may be increased, and the reduction of the outside diameter of the rotor 202 produces the effect of improving the efficiency by reducing the windage because of the cooling fan, and the effect of making it possible for the belt to have a long life by reducing the moment of inertia of the rotor 202.

In the above described embodiments, permanent magnets are arranged between claw magnetic poles so that the improvement of output power can be attained, and further, the copper loss of the stator winding can be suppressed, and as a result, the amount of heat generation can be suppressed. Since the heat generation can be suppressed, it is unnecessary to enlarge the cooling fan, so that the noise can also be suppressed.

As described above, according to the present invention, it is possible to attain the improvement in efficiency of an AC dynamo for a vehicle.

## Claims

1. An alternating current dynamo for a vehicle, comprising:
a rotor (202) which includes a pair of oppositely arranged claw-shaped magnetic poles (208, 209) and a field winding (107) for magnetizing said claw-shaped magnetic poles (208, 209), each of said claw-shaped magnetic poles (208, 209) being formed with a pluraliy of claw portions extending in an axial direction and the claw portions of one of the claw-shaped magnetic poles (208, 209) being arranged alternately to the claw portions of the other of the claw-shaped magnetic poles (208, 209) in a circumferential direction;
permanent magnets (112) arranged between said alternately arranged claw portions (208, 209); and
a stator comprising a stator core (105) arranged outside said rotor (202) with a specific space against said rotor (202) and a stator winding (106) which is held by said stator core (105) and generates AC voltage by rotation of said rotor (202);
wherein said rotor (202) and said stator core (105) have external appearances substantially in circle, and a ratio Dr/Ds is within a range of 0.72 to 0.6 in which Dr denotes an outside diameter of said rotor (202) and Ds denotes an outside diameter of said stator.

2. The alternating current dynamo for a vehicle according to claim 1, wherein said stator winding (106) includes six circuits connected in parallel, and a cross-sectional area of said one stator winding is 0.8 square mm or more, or the diameter is 1.0 mm or more.

3. The alternating current dynamo for a vehicle according to claim 2, wehrein said rotor (202) has said field winding (107) provided inside, and the claw portions of said claw-shaped magnetic poles (208, 209) are arranged outside said field winding (107), and the permanent magnets (112) are arranged outside said field winding (107), and non-magnetic plates (113) are arranged outside said permanent magnets (112) , and a thickness of said non-magnetic plates (113) is larger than a gap length between said rotor (202) and an inside of said stator.

4. The alternating current dynamo for a vehicle according to claim 3, wherein a ratio of said thickness of said non-magnetic plate (113) to said gap length is within a range of 2 to 4.

5. The alternating current dynamo for a vehicle according to claim 1, wherein said stator winding (106) is made by a method in which one continuous winding is shaped like a ring and the ring like winding is deformed to be a shape which is insertable into slots of the stator.

6. The alternating current dynamo for a vehicle according to one of claims 1 to 4, wherein said permanent magnets (112) comprise neodymium magnets.

7. An alternating current dynamo for a vehicle, comprising:
a rotor (202) comprising a first claw-shaped magnetic pole (208) having a plurality of claw portions projecting in an axial direction, a second claw-shaped magnetic pole (209) having a plurality of claw portions projecting in the axial direction, said first and second claw-shaped magnetic poles (208, 209) being arranged opposite to each other and said claw portions of each being alternately arranged in a circumferential direction, and a field winding (107) arranged inside said claw portions for magnetizing said claw-shaped magnetic poles (208, 209);
permanent magnets (112) arranged between said alternately arranged claw portions; and
a stator comprising a stator core (105) arranged with a specific space against said rotor (202) and having teeth (121) and a stator winding (106) arranged in said teeth (121);
wherein a ratio Lt/Ds is more than 0.1 and a ratio Dr/Ds is within a range of 0.72 to 0.6 in which Lt denotes a length of said teeth (121) in a radial direction, Ds denotes an outside diameter of said stator core (105) and Dr denotes an outside diameter of said rotor.

8. The alternating current dynamo for a vehicle according to claim 7, wherein an occupied ratio of said stator winding in the stator slots (122) is 0.55 to 0.8.

9. The alternating current dynamo for a vehicle according to claim 7, wherein a one-phase winding comprises four or more parallel circuits.

10. The alternating current dynamo for a vehicle according to any one of claims 7 to 9, wherein said stator winding (106) comprises a circular enamel wire, and a diameter of said enamel wire is 1.0 mm or more.

11. The alternating current dynamo for a vehicle according to any one of claims 7 to 9, wherein said permanent magnets (112) comprise neodymium magnets, and
the neodymium magnets are arranged between said claw portions, and non-magnetic plates (113) are arranged outside said neodymium magnets, and a thickness of said non-magnetic plates (113) is larger than a gap length between said rotor (202) and an inside of said stator.
